# EUROPEAN PATENT APPLICATION

(11) **EP 2 727 448 A1**
(43) Date of publication of application: **07.05.2014**
(21) Application number: 13187148.5
(22) Date of filing: 02.10.2013
(51) Int. Cl.: A01B 45/02

(54) **Walk behind aerator hydrostatic traction drive system**

(30) Priority: 30.10.2012 US 201213663982
(71) Applicant: Deere & Company, Moline, IL 61265-8098 (US)
(72) Inventor: Hall, Stanley K., Godwin, NC North Carolina 28344 (US); Zabel, Lorena, Raleigh, NC North Carolina 27603 (US); Aldridge, Bradley P., Evans, GA Georgia 30809 (US)
(74) Representative: Lange, Robert

(57) **Abstract**

A walk behind aerator (100) hydrostatic traction drive system includes left and right rear wheel hydrostatic motors (202, 203) driving left and right rear wheels (104) positioned forwardly of a coring head (114), and a front wheel hydrostatic motor (204) driving a single steerable front wheel (102) carried in a pivotal yoke. The pivotal yoke is coupled to a handle assembly (110) attached to a neck extending upwardly and forwardly for pivoting the single steerable front wheel (102) about a vertical pivot axis. A check valve (207) is connected in parallel to the front wheel hydrostatic motor (204). The check valve (207) opens if the walk behind aerator (100) moves in a forward direction and the handle assembly (110) is turned to pivot the single steerable front wheel (102) and the front wheel (102) rotates more than each rear wheel (104), or if the walk behind aerator (100) moves in a reverse direction.

## Description

This invention relates to aerators for aerating ground surfaces. More specifically, the invention relates to walk behind aerators having coring heads with a plurality of tines that repeatedly penetrate the ground surface.

Walk behind aerators are commonly used for maintaining landscaped ground surfaces including turf. The term "turf" refers to grass and other material which is specifically grown for sporting activities and is used, for example, to form golf course greens. Aerators on these types of surfaces have coring heads with tines that repeatedly penetrate the ground surface, forming a plurality of holes so that the ground surface is aerated, to improve growth of the grass or other material and enhance the condition of the surface for playing purposes.

Walk behind aerators may have flywheels that drive the upper ends of tine supports in a circular path, and the lower ends in a reciprocating motion of repeated penetrations into the ground. Link arms can pivot to compensate for forward motion of the machine. At each part of the cycle when the tines are withdrawn from the ground surface, the link arms may position the tines in a substantially vertical position for the next cycle of penetration into the ground. Tines are generally cylindrical, are hollow or solid, and produce holes by pulling up plugs or cylindrical cores of soil as the tines move by rotation of the flywheel.

Walk behind aerators may be supported for movement over the ground by a single steerable wheel which may be carried in a pivotal yoke that can rotate about a vertical pivot axis attached to the neck. An operator may steer the vehicle by using the handle assembly to pivot the single steerable front wheel about the vertical pivot axis. The single steerable wheel, and a pair of rear wheels, may be driven by a hydrostatic traction drive system.

An operator may use the handle assembly to turn a walk behind aerator around after each pass across a golf course green, and make the next pass adjacent the preceding pass by crossing the green in the opposite direction. If the walk behind aerator includes hydrostatic traction drive motors on all three wheels so the traction drive system operates in three wheel drive, the operator can pivot the handle assembly to reverse the aerator's direction of travel, but the aerator cannot turn sharply enough for the next pass across the green. The walk behind aerator's turning radius is limited because the aerator's steerable front wheel must travel a greater distance than each rear wheel through a turn. The shorter the turning radius, the greater distance the front wheel must travel relative to the rear wheels. A conventional three wheel drive hydraulic circuit, however, does not allow the front wheel to turn significantly faster than each rear wheel. As a result, a walk behind aerator with a conventional hydrostatic traction drive system cannot make short radius turns without the front wheel scuffing the turf. There is a need for a walk behind aerator hydrostatic traction drive system that can make short radius turns without the front wheel scuffing the turf.

A walk behind aerator hydrostatic traction drive system includes a pivotable handle assembly having a traction bail movable between a forward drive position, a neutral position, and a reverse drive position, and a switch actuatable to lower a coring head to a coring position. A front wheel is carried in a pivotal yoke about a vertical pivot axis and coupled to the handle assembly for pivoting the single steerable front wheel. A variable speed hydraulic pump receives signals based on the position of the traction bail and provides pressurized hydraulic fluid to a pair of rear hydrostatic wheel motors connected in parallel with each other for rotating a pair of rear wheels, and to a front hydrostatic wheel motor connected in series with the pair of rear wheel motors for rotating the single steerable front wheel. A check valve is connected to an outlet of the front hydrostatic wheel motor so that it opens in response to fluid pressure as the handle assembly pivots the single steerable front wheel while the aerator travels in a forward direction, and so that it also opens in response to fluid pressure while the aerator travels in a reverse direction. The walk behind aerator hydrostatic traction drive system can make short radius turns without the front wheel scuffing the turf.
Fig. 1 is a perspective view of a walk behind aerator with a hydrostatic traction drive system according to a preferred embodiment of the invention.
Fig. 2 is a schematic diagram of a hydrostatic traction drive system for a walk behind aerator according to a preferred embodiment of the invention.

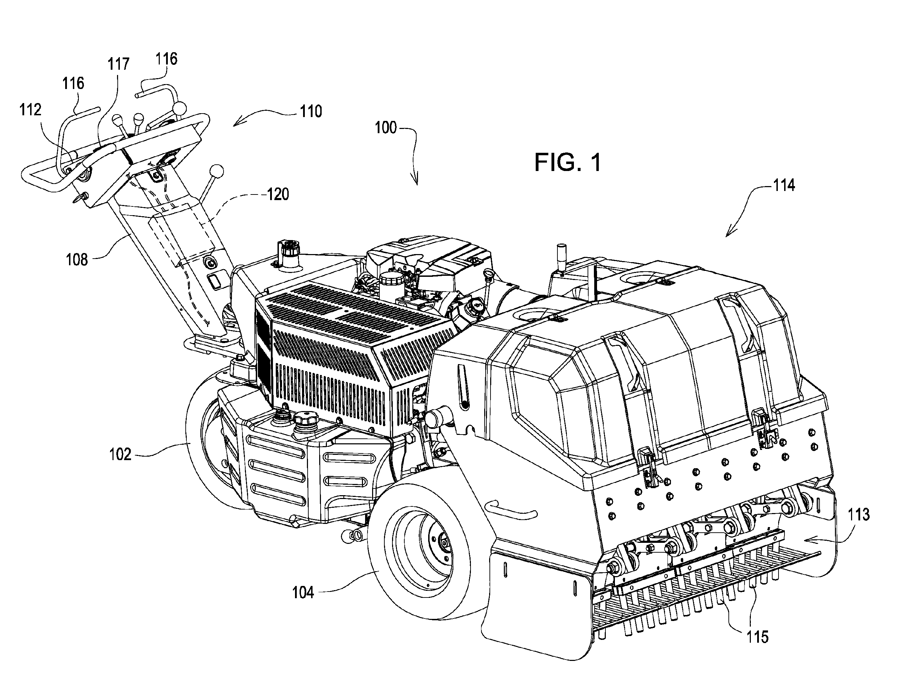

In one embodiment shown in Fig. 1, walk behind aerator 100 may be supported for movement over the ground by a single steerable front wheel 102 and a pair of driven rear wheels 104. The walk behind aerator may have a neck 108 extending upwardly from a forward end of the frame, and the single steerable front wheel may be carried in a pivotal yoke that can rotate about a vertical pivot axis attached to the neck. An upwardly and forwardly extending handle assembly 110 may be coupled to the pivotal yoke that carries the front wheel, and may include control panel 112. In the forward position, an operator may walk ahead of the aerator and steer the walk behind aerator by using the handle assembly to pivot the single steerable front wheel about the vertical pivot axis.

In one embodiment, coring head 114 may be mounted on the rear of the walk behind aerator, either behind the rear drive wheels and tires, between the rear drive wheels and tires, or adjacent the rear axle(s). The coring head may carry a plurality of tine assemblies 113 that reciprocate up and down by rotation of a crankshaft. Each tine assembly may have a plurality of coring tines 115 that are driven into the ground and produce holes for the purpose of aerating the turf. Each tine assembly may include a rubber dampener system that absorbs the forward motion of the aerator to help improve hole quality by minimizing hole elongation.

In one embodiment, the walk behind aerator may have an internal combustion engine or other power source supported on the frame that may be used to operate coring head 114. The internal combustion engine or other power source also may provide traction drive through a hydrostatic traction drive system including a pump to supply pressurized fluid to hydrostatic motors that rotate each of the three wheels.

In one embodiment, the operator may operate the traction drive to move the walk behind aerator forward or in reverse by moving traction bail 116 in either the forward or reverse direction. The traction bail may be a single lever or a pair of levers pivotably mounted to the sides of the operator controls on the handle assembly of the aerator. The traction bail may be biased to a central or neutral position when released by the operator.

The walk behind aerator may be provided with a hydrostatic traction drive system that can move the aerator in the forward direction at a coring ground speed while the coring head is operating, or in the reverse direction while the coring head is not operating. Additionally, the hydrostatic traction drive system can move the aerator in the forward direction at a transport speed while the coring head is not operating. An operator typically may walk in front of the aerator as it moves in the forward direction. However, those skilled in the art will understand that the aerator with a hydrostatic traction drive system is not limited to aerators with the same forward and reverse designations used in this application, but are intended to include any other walk behind aerators.

In one embodiment, the walk behind aerator may include a hydraulic lift and lower system to raise the coring head to a transport position and lower the coring head to an operating or coring position. The system may include switch 117 on control panel 112 that an operator may actuate to raise and lower the coring head. Switch 117 may be electrically connected to controller 120. In response to actuation of the switch, the controller may provide a signal to a solenoid valve or other mechanism in a hydraulic circuit that may extend or retract a lift cylinder. Optionally, an electro-hydraulic pump may be provided on the aerator to raise and lower the coring head using electric power.

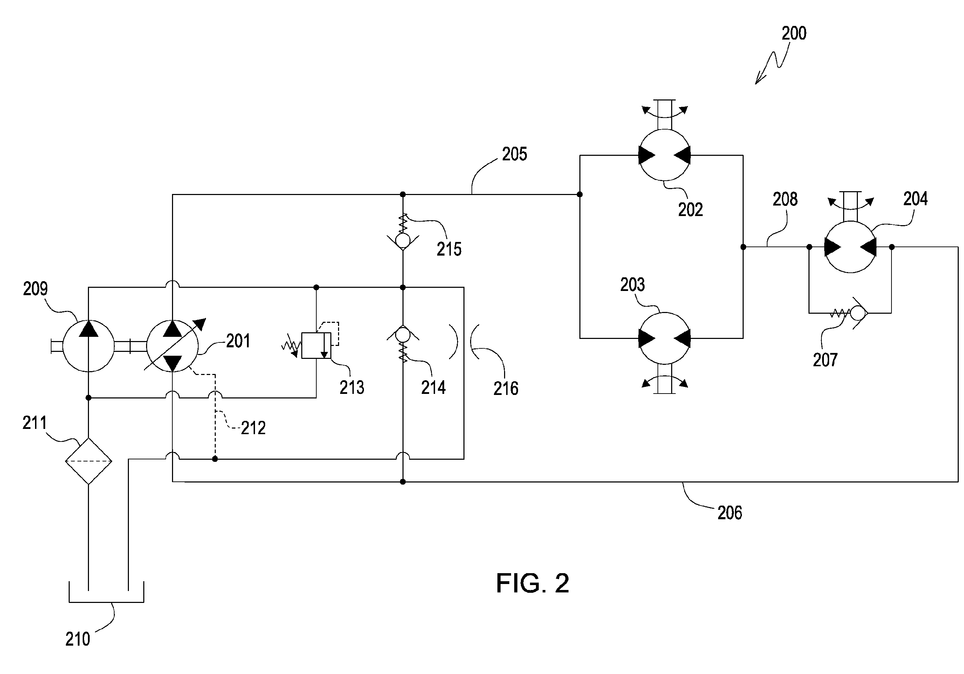

One embodiment of the hydrostatic traction drive system 200 for a walk behind aerator is shown in the diagram of Fig. 2. In this embodiment, the walk behind aerator traction drive system may operate in forward by holding traction bail 116 on handle assembly 110 in a forward position while walking in front of the aerator. While operating in forward, the operator also may actuate switch 117 to lower coring head 114 and begin coring. In the forward position, the traction bail may cause a signal directly or indirectly through controller 120 to variable speed pump 201, which may provide pressurized hydraulic fluid to left and right rear hydrostatic wheel motors 202, 203 connected in parallel to each other, and then through line 208 to front hydrostatic wheel motor 204 connected in series with the pair of rear wheel motors. The variable speed pump may be connected by line 205 to the pair of rear wheel motors, and by line 206 to the front wheel motor.

In one embodiment, the walk behind aerator hydrostatic traction drive system may include check valve 207 connected in parallel to front hydrostatic wheel motor 204. Preferably, the check valve may be integral with the front wheel motor. The check valve may be spring biased to a closed position, and may open if hydraulic fluid pressure at the outlet of the front wheel motor in line 206 exceeds the pressure at the inlet to the front wheel motor in line 208.

In one embodiment, the walk behind aerator hydrostatic traction drive system may allow the front wheel to rotate faster than either of the rear wheels during a forward turn. For example, at the end of each pass across a green, an operator may actuate switch 117 to raise the coring head, and then start a sharp forward turn by turning handle assembly 112 while continuing to walk in front of the aerator. The handle assembly may be used to pivot the steerable front wheel about its vertical pivot axis. During the forward turn, the steerable front wheel may have a longer distance to travel than each of the rear wheels. Until the steerable front wheel can rotate faster than either rear wheel, hydraulic fluid pressure increases in line 206 at the outlet of front wheel motor 204. The increased fluid pressure acts against the spring bias to open check valve 207. Opening check valve 207 allows recirculation of hydraulic fluid through front wheel motor 204. By opening the check valve, the walk behind aerator hydrostatic traction drive system allows the steerable front wheel to rotate faster than each of the rear wheels during the forward turn.

In one embodiment, the walk behind aerator hydrostatic traction drive system may include check valve 207 to protect front wheel motor 204 from cavitation during forward turns because the check valve does not allow the inlet of the motor at line 208 to operate at a lower pressure than the outlet at line 206. By opening the check valve during a forward turn, the walk behind aerator hydrostatic traction drive system may keep the front wheel from rotating too slowly during a forward turn which may scuff the turf.

In one embodiment, the walk behind aerator hydrostatic traction drive system also may include charge pump 209 which helps maintain the outlet of motor 204 to line 206 at positive pressure. The charge pump may be connected to hydraulic fluid reservoir 210 through filter 211. Additionally, variable speed pump 201 may be connected to the reservoir by case drain line 212. The charge system also may include charge relief valve 213, check valves 214, 215, and cooling orifice 216.

In one embodiment, the walk behind aerator traction drive system may operate in reverse by holding traction bail 116 on handle assembly 110 in a reverse position while walking behind the aerator. In the reverse position, the traction bail may cause a signal directly or indirectly through controller 120 to variable speed pump 201, which may provide pressurized hydraulic fluid through line 206 to front hydrostatic wheel motor 204, and then through line 208 to left and right rear hydrostatic wheel motors 202, 203 connected in parallel to each other. When the walk behind aerator hydrostatic traction drive system is operated in reverse, the inlet to the front wheel motor is through line 206 and the outlet is line 208. In reverse, check valve 207 may be open because hydraulic fluid pressure in line 206 exceeds the pressure in line 208. As a result, when the traction bail is in the reverse position, the front wheel rotates freely and does not provide any traction. Only the left and right rear hydrostatic wheel motors are used in reverse.

## Claims

1. A walk behind aerator hydrostatic traction drive system, comprising:
a left rear wheel hydrostatic motor and a right rear wheel hydrostatic motor driving left and right wheels of the aerator positioned forwardly of a coring head;
a front wheel hydrostatic motor driving a single steerable front wheel carried in a pivotal yoke about a vertical pivot axis; the pivotal yoke coupled to a handle assembly attached to a neck extending upwardly and forwardly and that may be turned using the handle assembly to pivot the single steerable front wheel; and
a check valve in parallel to the front wheel hydrostatic motor; the check valve opening if the walk behind aerator moves in a forward direction and the handle assembly is turned to pivot the single steerable front wheel and the front wheel rotates more than each rear wheel, and the check valve opening if the walk behind aerator moves in a reverse direction.

2. The walk behind aerator hydrostatic traction drive system according to claim 1, further comprising a charge pump.

3. The walk behind aerator hydrostatic traction drive system according to the claims 1 or 2, wherein the check valve is integral with the front wheel hydrostatic motor.

4. The walk behind aerator hydrostatic traction drive system according to one of the claims 1 to 3, wherein the left and right rear wheel hydrostatic motor are connected in parallel.
